# EUROPÄISCHE PATENTSCHRIFT

(11) **EP 4 091 783 B1**
(45) Veröffentlichungstag und Bekanntmachung des Hinweises auf die Patenterteilung: **20.08.2025**
(21) Anmeldenummer: 22168680.1
(22) Anmeldetag: 16.04.2022
(51) Int. Cl.: B29C 31/06, B29C 31/10, B29C 45/18, B29C 45/76, B29B 17/00, B29K 105/26

(54) **VERFAHREN ZUR VERARBEITUNG VON WIEDERVERWENDETEM ODER REZYKLIERTEM SCHÜTTGUT, INSBESONDERE FESTSTOFFEN, WIE GRANULATE, PULVER, KÖRNER, FOLIEN, SCHNIPSEL, O. DGL., VORZUGSWEISE FÜR KUNSTSTOFFVERARBEITENDE MASCHINEN UND KUNSTSTOFFVERARBEITUNGS-ANLAGEN HIERFÜR**
METHOD FOR PROCESSING RECYCLED OR REUSED BULK MATERIAL, IN PARTICULAR SOLIDS, SUCH AS GRANULES, POWDERS, GRANULES, FILMS, SHREDS, OR THE LIKE, PREFERABLY FOR PLASTICS PROCESSING MACHINES AND PLASTIC PROCESSING PLANTS THEREFOR
PROCÉDÉ DE TRAITEMENT DES PRODUITS EN VRAC RÉUTILISÉS OU RECYCLÉS, EN PARTICULIER DES SOLIDES TELS QUE LES GRANULÉS, LA POUDRE, LES CÉRÉALES, LES FEUILLES, LES PETITS MORCEAUX OU ANALOGUES, DE PRÉFÉRENCE POUR MACHINES DE TRAITEMENT DES MATIÈRES PLASTIQUES ET INSTALLATIONS DE TRAITEMENT DES MATIÈRES PLASTIQUES ASSOCIÉES

(30) Priorität: 18.05.2021 AT 503832021
(43) Veröffentlichungstag der Anmeldung: 23.11.2022
(73) Patentinhaber: Wittmann Technology GmbH, 1220 Wien (AT)
(72) Erfinder: Wittmann, Michael Peter, 2100 Leobendorf (AT)
(74) Vertreter: SONN Patentanwälte GmbH & Co KG

(56) Entgegenhaltungen:
- US-A- 4 013 745
- US-A1- 2017 312 971
- US-A1- 2020 078 999

## Beschreibung

Die Erfindung betrifft ein Verfahren zur Verarbeitung von Schüttgut, insbesondere Feststoffen, wie Granulate, Pulver, Körner, Folien, Schnipsel, o. dgl., für kunststoffverarbeitende Spritzgießmaschinen und eine Kunststoffverarbeitungsanlage, wie sie in den Oberbegriffen der Ansprüche 1 und 13 beschrieben sind.

Die Kunststoffindustrie wird durch die öffentliche Meinung bzw. politische Entscheidungen vermehrt in Richtung Wiederverwendbarkeit von Kunststoffmaterialien und verstärkten Einsatz von Recyclingmaterial, also zu einer Kreislaufwirtschaft, geführt.

Abnehmer von Kunststoffteilen mit hohen Qualitäts- und Sicherheitsansprüchen, wie zum Beispiel Automobilfirmen, die die Kunststoffteile bzw. Spritzgießteile zum größten Teil außer Haus bei Lohnfertigern produzieren lassen, kommen durch die Verwendung von zugemischtem Rezyklat, Mahlgut oder Regranulat zu einer Neuware, insbesondere typen- oder sortenreines Granulat, in eine schwierige Situation, da sie einerseits den tatsächlichen Rezyklat-/Mahlgutanteil in einem fertigen Kunststoffteil nicht kontrollieren können und ein unkontrolliert hoher Rezyklat-/Mahlgutanteil andererseits zu langfristigen Qualitätsproblemen führen kann. Ein zu hoher Rezyklat-/Mahlgutanteil kann die mechanischen Eigenschaften des fertigen Kunststoffteiles verändern und zu frühzeitiger Rissbildung oder Brüchen führen. Eine genaue Kontrolle der Zusammensetzung des verwendeten Materials für den Spritzgießprozess, insbesondere bei einem fertigen Spritzgießteil bzw.

Kunststoffteil, durch den Abnehmer ist wiederum fast nicht möglich und basiert vielfach auf reiner Vertrauensbasis.

Um dem entgegenzuwirken bzw. etwaige zukünftige Probleme durch Mahlgut- /Rezyklateinwirkung auf die Kunststoffteile zu vermeiden, schreiben Automobilfirmen oder andere Käufer von Kunststoffteilen typischerweise den Einsatz von 100% Neuware, im Normalfall sogar typenreiner Neuware, vor. Dabei kann bei einem vor Ort-Audit der Produktionseinrichtung durch den Abnehmer sehr viel einfacher auf den alleinigen Einsatz dieser Neuware geprüft werden als auf ein richtiges Mischungsverhältnis von Neuware und Mahlgut-/Rezyklat.

Das erhöhte Bewusstsein für Umweltschutz und das Abwenden der öffentlichen Meinung von einer Wegwerfwirtschaft (Linear Economy) zu einer Kreislaufwirtschaft (Circular Economy) verstärkt jedenfalls die Notwendigkeit auch bei langlebigen Kunststoffprodukten einen bestimmten Mahlgut-/Rezyklatanteil zu gestatten.

Aus der US 4013745 A ist ein Verfahren zum Extrudieren einer Kunststofffolie mit geringen Dickenschwankungen bekannt, bei der Rücklaufmaterial (Rezyklat), das aus Material der Randstreifen und Abfallprodukten gebildet ist, zerkleinert wird und mit Neuware vor dem Plastifizieren und Extrudieren vermischt wird. Dabei wird das Gewicht des Rücklaufmaterials, als auch der Neuware ständig gemessen und einem Regelsystem zugeführt, sodass der Füllgrad der Schneckenpresse konstant gehalten wird, um die konstante Stärke der Folie zu gewährleisten.

Weiters beschreibt die US 2017/312971 A1 ein Verfahren zur Herstellung von Polyesterbänder, bei dem das extrudierte Polyesterband beschnitten wird und die beschnittenen Randstreifen direkt in die Schmelzmischvorrichtung zugeführt wird, sodass die Einwirkung von Feuchtigkeit relativ kurz ist und somit ein Abfall der Viskosität in der Schmelzmischvorrichtung auf ein Minimum reduziert wird. Dabei wird Viskosität gemessen und so gesteuert, dass die Viskosität um höchstens 10% bevorzugt um höchstens 5% in Bezug auf einen Zielwert variiert.

Aus der US 2020/078999 A1 ist ein System zur Steuerung einer Spritzgießmaschine mit einer Form bekannt, wobei die Form einen Formhohlraum bildet und gemäß einem Einspritzzyklus gesteuert wird. Das Einspritzen eines geschmolzenen Polymers in den Formhohlraum gemäß dem Einspritzzyklus erfolgt unter Verwendung einer Schnecke, die sich von einer ersten Position zu einer zweiten Position bewegt. Unter Verwendung eines Sensors wird mindestens eine Größe während des anschließenden Materialeinzugs und der Plastifizierung gemessen, wobei mindestens ein Betriebsparameter der Spritzgießmaschine, basierend auf der mindestens eine Messgröße während der Dosierbewegung der Zylinderschnecke angepasst wird.

Aufgabe der Erfindung ist es daher ein Verfahren zur Verarbeitung von Schüttgut, insbesondere Feststoffen, wie Granulate, Pulver, Körner, Folien, Schnipsel, o. dgl., vorzugsweise für kunststoffverarbeitende Maschinen und eine Kunststoffverarbeitungsanlage zu schaffen, bei dem einerseits die genannten Nachteile vermieden werden und andererseits eine Dokumentation bzw. Qualitätssicherung für das Mischungsverhältnisses von Mahlgut/Rezyklat zu Neuware zu ermöglichen.

Die Aufgabe wird durch die Erfindung gelöst. In den Unteransprüchen sind weitere vorteilhafte Maßnahmen und Ausbildungen beschrieben.

Das erfindungsgemäße Verfahren ist dadurch gekennzeichnet, dass die zumindest eine Vorrichtung zur Dosierung, diese zumindest zwei separaten Schüttgüter in beliebiger Abfolge zusammenführt, wobei gleichzeitig oder nach der Dosierung das jeweils dosierte Schüttgutgewicht ermittelt wird und die Information zu den Schüttgutgewichten und/oder eine daraus resultierende Information, die den Materialdurchsatz jedes einzelnen oder aller zugeführter Schüttgüter darstellt, von der Steuerung der Vorrichtung zur Dosierung an die kunststoffverarbeitende Maschine oder an eine übergeordnete Steuerung übertragen wird und in der kunststoffverarbeitenden Maschine eine physikalische Darstellung des Fließverhaltens in Form eines Schmelzflussindex oder ein Äquivalent zum Schmelzflussindex (Kennzahl für die Viskosität), des zugeführten Schüttgutes und/oder der Materialdurchsatz oder -verbrauch der Maschine ermittelt wird und diese Informationen in der kunststoffverarbeitenden Maschine oder in der übergeordneten Steuerung in Verbindung gebracht werden, wobei der Schmelzflussindex (21) oder ein äquivalenter Wert zum Schmelzflussindex (21) jeweils zu einem Produktionszyklus von Spritzgießteilen (3) ermittelt wird. Vorteilhaft ist dabei, dass durch die automatische physikalische Darstellung des Fließverhaltens des gemischten Schüttgutes, insbesondere des Parameters des Schmelzflussindexes oder einer Kennzahl für die Viskosität, ein System geschaffen wird, welches dem Abnehmer der erzeugten Kunststoffteile bzw. Spritzgießteile erlaubt, das Mischungsverhältnis von Neuware und Mahlgut/Rezyklat dokumentiert zu erhalten, auditieren zu können und mögliche Abweichung gesichert aufzuzeigen. In einem Produktionsaudit werden typischerweise die Grundparameter für die Produktion eines Teiles festgelegt:
- zu verwendendes Material oder Materialien
- Prozessparameter der Maschine und der Peripherie
- Zykluszeit
- Mahlgutanteil
- Etc.

Sollte in der Produktion eine Änderung des Mischungsverhältnisses von Neuware zu Mahlgut/Rezyklat oder daraus resultierend eine Änderung des Schmelzflussindex (MFI, MFR) oder einer Kennzahl zum Fließverhalten erfolgen, kann dies folgendermaßen aufgezeigt werden:
- wenn das geänderte Mischungsverhältnis über die Vorrichtung zum Dosieren entsprechend eingestellt wird, sind die geänderten Dosierparameter in der Datenbank oder unmittelbar an der Vorrichtung oder Steuerung der kunststoffverarbeitenden Maschine erkennbar;
- wenn eine ersichtliche Diskrepanz beim Materialverbrauch zwischen Maschine und Vorrichtung zur Dosierung erfolgt, kann der Grund dafür ein dazwischengeschaltetes Fördergerät oder eine weitere Förderstelle sein. Diese zusätzliche Förderstelle ließe sich über ein Fördergerät mit zwei Materialeinlässen erreichen. Typischerweise werden solche Fördergeräte für das Beimengen von Mahlgut in einer sogenannten Inline-Recycling-Anlage verwendet. Auch dieser Fall ist sehr einfach in der Datenbank oder unmittelbar an den einzelnen Steuerungen erkennbar.
- wenn bereits die Neuware mit Mahlgut versetzt ist, jedoch nur als Neuware in der Vorrichtung zum Dosieren beigemengt wird, zeigt die von der kunststoffverarbeitenden Maschine ermittelte Kennzahl zum Fließverhalten des zugeführten Schüttgutes oder der Schmelzflussindex (MFI, MFR) eine Abweichung vom Sollzustand an.

Damit wird sichergestellt, dass jede Veränderung des Mischverhältnisses erfasst und hinterlegt, insbesondere in einer Datenbank gespeichert wird, die der Abnehmer jederzeit abrufen und auswerten kann.

In der Produktion werden die relevanten Prozessparameter in einem externen Datenserver, z.B. MES System oder direkt in der Steuerung der kunststoffverarbeitenden Maschine oder der Vorrichtung zum Dosieren abgespeichert. Typischerweise werden die relevanten und jeweils aktuellen Prozessparameter und Prozessvorgaben nach Fertigstellung des Produktionszyklus der kunststoffverarbeitenden Maschine in einer Datenbank abgespeichert. Je nach Ausprägung der Vernetzung von an der Produktion des Kunststoffteiles beteiligter anderer Produktionsmittel, werden auch die Parameter der Produktionsmittel an die Datenbank übertragen und abgespeichert. Die Daten der Vorrichtung zum Dosieren müssen selbstverständlich ebenfalls in der Datenbank abgelegt werden.

Eine Vorrichtung zum Dosieren kann ein gravimetrisches Dosiergerät, ein volumetrisches Dosiergerät, ein Fördergerät mit Materialweiche (d.h. mit mehreren individuell schaltbaren Materialeinlässen) mit anschließender oder kontinuierlicher Abwaage der jeweiligen Materialzugabe oder dergleichen sein.

Von Vorteil sind die Maßnahmen, bei denen die Vorrichtung zur Dosierung mit einer oder mehrerer Wiegezellen zur Ermittlung des Materialgewichtes ausgestattet ist oder einer Zählvorrichtung für die Ermittlung von Schüttguteinheiten, die rechnerisch das Äquivalent zu einem Materialgewicht ergeben. Dadurch wird erreicht, dass das genaue Gewicht oder die genaue Anzahl des der kunststoffverarbeitenden Maschine zugeführten Schüttguts ermittelt und für die Qualitätssicherung gespeichert wird.

Es sind die Maßnahmen von Vorteil, bei denen die kunststoffverarbeitende Maschine aus den Verfahrensparametern der zu verarbeitenden Polymerschmelze des zugeführten Schüttgutes nach der Dosierung eine physikalische Größe ermittelt, welche sich proportional zum Fließverhalten der Schmelze, beispielsweise einem Schmelzflussindex, verhält. Dadurch wird erreicht, dass ein Parameter für die Nachverfolgung geschaffen wird, der von den Abnehmern der Kunststoffteile, wie beispielsweise die Autoindustrie, einfach und schnell zu überprüfen sind. Gleichzeitig kann bzw. wird dieser Parameter des Fließverhaltens, insbesondere der Schmelzflussindex, zu jedem erzeugten Kunststoffteil ermittelt und gespeichert, sodass auch nach länger Zeitdauer auf das Mischungsverhältnis, insbesondere auf dem Anteil des zugemischten Mahlguts/Rezyklats rückgeschlossen werden kann.

Vorteilhaft sind aber auch die Maßnahmen, bei denen das Mischungs- oder Gewichtsverhältnis der zumindest zwei Schüttgüter nach dem Dosiervorgang einer frei wählbaren oder einstellbaren Vorgabe oder einem ausgewählten oder übertragenem Rezept entsprechen muss, wobei bei Batchdosierung das fertig dosierte Batch aus zumindest einem oder mehreren Dosiervorgängen je Schüttgut gebildet wird oder bei kontinuierlicher Dosierung zumindest ein Schüttgut durchgehend von der kunststoffverarbeitenden Maschine eingezogen wird und zumindest ein Schüttgut kontinuierlich nach Einstellung hinzudosiert wird. Dadurch wird erreicht, dass nach Vorgaben des Abnehmers jedes beliebige Mischverhältnis für die Produktion eines Kunststoffteils vorgegeben und eingestellt werden kann. Nachdem sämtliche Parameter für die Herstellung des Kunststoffteils eingestellt wurden und die Produktion des Kunststoffteils erfolgt, kann anschließend über das ermittelte Fließverhalten, insbesondere dem Schmelzflussindex, die Nach- bzw. Rückverfolgbarkeit einfach durchgeführt werden. Dadurch bekommt der Kunde bzw. Auftraggeber ein lückenloses Qualitätssicherungsprotokoll aus dem erstmalig das Mischverhältnis nicht nur angegeben, sondern auch automatisch vorzugsweise über die kunststoffverarbeitenden Maschine oder einer Arbeitszellensteuerung ermittelt und überwacht wurde.

Es sind aber auch die Maßnahmen von Vorteil, bei denen die übergeordnete Steuerung eine externe Arbeitszellensteuerung zur logischen Verwaltung und Datenkommunikation von Produktionsmitteln, beispielsweise der kunststoffverarbeitenden Maschine und der Vorrichtung zur Dosierung sein kann, mit oder ohne Anschluss an ein nachfolgendes MES- oder ERP-System oder direkt ein MES- oder ERP-System. Dadurch wird erreicht, dass für nicht prozessrelevante Aufgaben, wie Berechnungen, Speicherung, usw., der Produktionsdaten bzw.

Parameter die kunststoffverarbeitende Maschine, insbesondere die Spritzgiessmaschine, nicht belastet wird, sondern dies über die externe Arbeitszellensteuerung durchgeführt wird. Die Arbeitszellensteuerung übernimmt dabei sämtliche Aufgaben, die nicht mit der direkten Herstellung des Kunststoffteils verbunden sind. Hierbei kann die Arbeitszellensteuerung sämtliche Daten der weiteren Produktionsmittel abfragen, erfassen und speichern. Grundsätzlich ist zu erwähnen, dass bei Einsatz einer Arbeitszellensteuerung, die für die Erstellung eines Spritzgiessteils notwendigen Produktionsmittel in einer sogenannten Arbeitszelle zusammen geschlossen sind.

Von Vorteil sind aber auch die Maßnahmen, bei denen zumindest die von der kunststoffverarbeitenden Maschine und von der zumindest einen Vorrichtung zur Dosierung ermittelten Informationen, wie beispielsweise einzelne Schüttgutgewichte, das Mischungsverhältnis der Materialien, Materialverbräuche oder entsprechende Differenzen, eine Kennzahl zum Fließverhalten des zugeführten Schüttgutes oder der Schmelzflussindex angezeigt, ausgewertet oder dokumentiert werden, vorzugsweise in der Steuerung der kunststoffverarbeitenden Maschine oder in einem mit der Steuerung der kunststoffverarbeitenden Maschine und/oder der Vorrichtung zur Dosierung verbundenen System, beispielsweise einer übergeordneten Steuerung. Dadurch ist es möglich, dass direkt beim Herstellungsprozess, die für die Qualitätssicherung wesentlichen Parameter angezeigt werden können, um eine schnelle und einfache Kontrolle zu ermöglichen. Dabei ist es möglich, dass die IST-Darstellungen mit entsprechend farblich unterschiedlichen Soll-Darstellungen bzw. Toleranzbereichen angezeigt werden, sodass sofort erkennbar ist, ob die IST-Werte innerhalb der Vorgaben liegen. Dabei ist es auch möglich, dass bei Abweichung der IST-Werte außerhalb der Toleranzwerte bzw. Soll-Werte ein Warnsignal ausgesendet bzw. angezeigt wird, um das Bedienerpersonal schnell darauf aufmerksam zu machen.

Vorteilhaft sind aber auch die Maßnahmen, bei denen zumindest die von der kunststoffverarbeitenden Maschine und von der zumindest einen Vorrichtung zur Dosierung ermittelten Informationen, wie beispielsweise einzelne Schüttgutgewichte, das Mischungsverhältnis der Materialien, Materialverbräuche oder entsprechende Differenzen, eine Kennzahl zum Fließverhalten des zugeführten Schüttgutes oder der Schmelzflussindex innerhalb einstellbarer Differenzen zu Referenzvorlagen liegen müssen, um auf eine korrekte Schüttgutbeistellung im laufenden Betrieb oder in einem Testbetrieb, beispielsweise einem Audit, schließen zu können. Dadurch wird erreicht, dass eine einfach und schnelle Kontrolle ermöglicht wird.

Es sind aber auch Maßnahmen von Vorteil, bei denen zumindest eine, vorzugsweise zwei Referenzvorlagen vorliegen, die einerseits die genehmigte Mahlgutzumischung abbilden, als auch keine Mahlgutzumischung, sprich die alleinige Anwendung von Neuware, da alle Zwischenstufen als erlaubtes Mischungsverhältnis angesehen werden. Dadurch wird erreicht, dass der beauftragte Dienstnehmer innerhalb dieses Bereiches das Produkt, insbesondere die Spritzgiessteile, herstellen kann und sämtliche außerhalb dieses Bereiches produzierten Teile als Ausschuss gelten bzw. erfasst werden.

Von Vorteil sind die Maßnahmen, bei denen darüber hinausgehende Daten, die sowohl von der kunststoffverarbeitenden Maschine als auch von der oder den Vorrichtungen zur Dosierung stammen, vorzugsweise in der Steuerung der kunststoffverarbeitenden Maschine oder in einem mit der Steuerung der kunststoffverarbeitenden Maschine und/oder der Vorrichtung zur Dosierung verbundenen System, beispielsweise einer übergeordneten Steuerung, ausgewertet und/oder dokumentiert werden, beispielsweise die aktuellen Prozessparameter der Maschine und/oder Prozessparameter von der oder den Vorrichtungen zur Dosierung, dgl. Dadurch wird eine lückenlose Nachverfolgung und Qualitätssicherung ermöglicht.

Vorteilhaft sind die Maßnahmen, bei denen die Vorrichtung oder Vorrichtungen zur Dosierung auch direkt mit der kunststoffverarbeitenden Maschine verbunden sein können und eine über den Materialverbrauch und/oder eine Kennzahl zum Fließverhalten des zugeführten Schüttgutes oder Schmelzflussindex hinausgehende Datenverarbeitung zwischen den beiden Produktionsmitteln stattfinden kann. Dadurch wird eine kompakte Arbeitszelle geschaffen.

Es sind aber auch die Maßnahmen von Vorteil, bei denen die kunststoffverarbeitende Maschine die Charakteristik der Schüttgutschmelze, beispielsweise in Form einer Kennzahl oder eines Schmelzflussindex, beim Aufdosieren bzw. beim Einspritzvorgang in das formgebende Werkzeug dokumentiert, analysiert oder sofort eine einstellbare Aktion ausführt. Dadurch wird eine einfache und schnelle Nachverfolgbarkeit geschaffen, da durch die Ermittlung bzw. Berechnung eines bestimmten Parameters die Nachverfolgung sehr einfach erfolgen kann. Liegt dieser Parameter innerhalb eines vorgegebenen Toleranzbereiches, so kann das hergestellte Kunststoffteil verwendet werden, wogegen ab zu großer Abweichung und Überschreitung der Grenzwerte, der hergestellte Kunststoffteil als Ausschussware deklariert wird.

Von Vorteil sind die Maßnahmen, bei denen das Dosiergerät die Charakteristik der Mischung der Schüttgutkomponenten dokumentiert, analysiert oder sofort eine einstellbare Aktion ausführt. Dadurch wird sichergestellt, dass bei zu großen Abweichungen automatisch und sehr rasch reagiert wird, um möglichst wenig Ausschussware zu produzieren.

Weiters wird die Aufgabe durch eine Kunststoffverarbeitungsanlage zur Verarbeitung von wiederverwendetem oder rezyklierten Schüttgut, insbesondere Feststoffen, wie Granulate, Pulver, Körner, Folien, Schnipsel, o. dgl. gelöst, bei der die kunststoffverarbeitenden Spritzgießmaschine und/oder eine externe Arbeitszellensteuerung zur physikalische Darstellung eines Fließverhaltens in Form eines Schmelzflussindex, des zugeführten Schüttgutes und/oder der Materialdurchsatz oder -verbrauch der Maschine und zum Ausführen des Verfahrens gemäß den Ansprüchen 1 bis 12 ausgebildet ist.

Vorteilhaft ist hierbei, dass durch die graphische Darstellung des, das Mischungsverhältnis repräsentierenden Parameters, eine einfach Kontrolle direkt am Produktionsort ermöglicht wird. Somit kann das Bedienerpersonal bei zu großen Abweichungen sofort einschreiten und entsprechende Einstellungen oder Änderungen vornehmen, um den Parameter wieder in den gewünschten Bereich zu führen.

Die Erfindung wird anhand eines in den Zeichnungen dargestellten Ausführungsbeispiels näher erläutert, wobei die Erfindung nicht auf die gezeigten Darstellungen, insbesondere den Aufbau und die Zusammensetzung der Anlagen, begrenzt ist.

Es zeigen:
- Fig. 1: ein Übersichtbild einer kunststoffverarbeitenden Produktionszelle mit mehreren Produktionsmitteln, in vereinfachter, schematischer Darstellung;
- Fig. 2: eine schaubildliche Darstellung einer Arbeitszelle zur Dosierung von zumindest zwei Schüttgütern, insbesondere einer Neuware und einem Mahlgut/Rezyklat, in vereinfachter, schematischer Darstellung; die Dosierung erfolgt neben der Spritzgießmaschine;
- Fig. 3: ein weiteres Ausführungsbeispiel einer Arbeitszelle zur Förderung von zwei Schüttgütern, insbesondere einer Neuware und einem Mahlgut/Rezyklat, in vereinfachter, schematischer Darstellung; die Dosierung erfolgt direkt auf der Spritzgießmaschine
- Fig. 4: ein Ausführungsbeispiel einer Arbeitszelle zur Förderung von drei Schüttgütern, insbesondere eine Neuware und ein zwei Rezyklaten, in vereinfachter, schematischer Darstellung;
- Fig. 5: eine schematische Darstellung der Auswirkung von Schüttgut mit unterschiedlichem Schmelzflussindex auf den Druckverlauf beim Einspritzvorgang der Spritzgießmaschine, in vereinfachter, schematischer Darstellung.
- Fig. 6: eine Darstellung der Einspritzprofile über Zeit für zwei Materialien unterschiedlicher Viskosität, in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

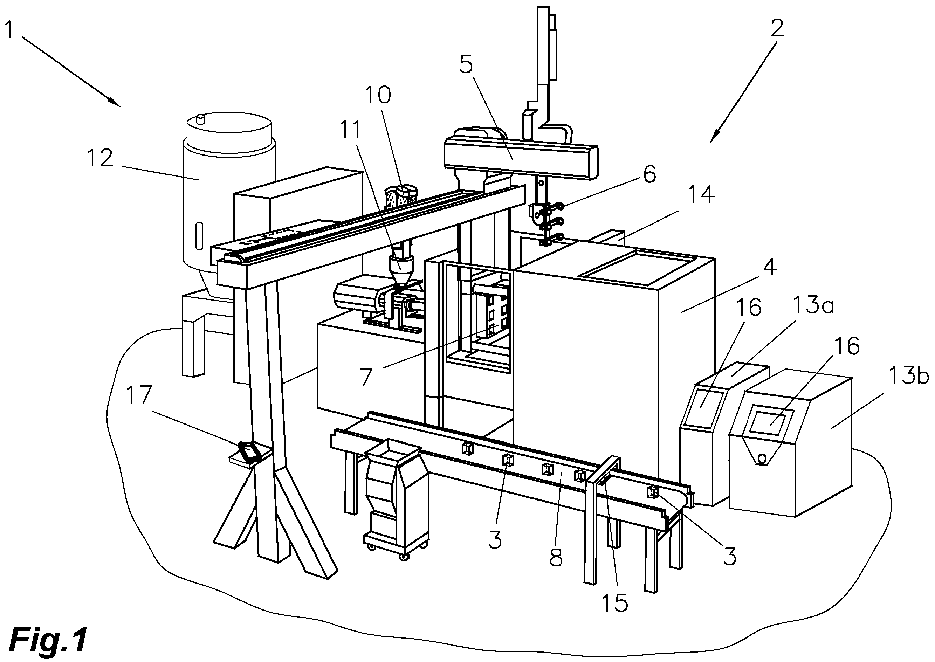

In den Fig. 1 bis 6 ist eine Produktionszelle bzw. Kunststoffverarbeitungsanlage 1 vorzugsweise für Spritzgießanwendungen gezeigt, bei der die einzelnen Produktionsmittel 2 bzw. Geräte 2 zum Erzeugen eines oder mehrerer Produkte/Halbprodukte oder Spritzgießteile 3 bzw. Kunststoffteil 3 in der Kunststoffverarbeitungsanlagen 1 beteiligt sind. Als kunststoffverarbeitende Maschine 4 wird in dem gezeigten Ausführungsbeispiel eine Spritzgießmaschine 4 eingesetzt, der ein Roboter 5 bzw. Handhabungsautomat zum Entnehmen des hergestellten Spritzgießteils 3 zugeordnet ist, wobei das Spritzgießteil 3 von einer Entnahmevorrichtung 6, insbesondere einem Greifer ausgestattet mit Greifzangen oder Saugdüsen, aus einem sich öffnenden Formwerkzeug 7 entnommen und auf eine Vorrichtung, beispielsweise ein Transportband 8, abgelegt wird. Der Vollständigkeit halber wird erwähnt, dass die erfindungsgemäße Lösung auch auf andere kunststoffverarbeitende Maschinen 4 bzw. Anwendungen, wie beispielsweise Extrusion, Kalandrieren, Rotationsformen, Schäumen, Spritzblasen, usw., angewandt werden kann.

Um einen Spritzgießteil 3 bzw. Kunststoffteil 3 herstellen zu können, wird Mahlgut 9 bzw. Schüttgut 9, insbesondere Kunststoffgranulat, über ein Granulatfördergerät 10 und eventuell über ein Dosiergerät 11 der Spritzgießmaschine 4 zugeführt. Über ein Temperiergerät 13a und/oder Kühlgerät 13b kann die Spritzgussform, insbesondere das Formwerkzeug 7, durch Zuführung eines Temperiermediums auf Betriebstemperatur gehalten werden bzw. entsprechend geheizt oder gekühlt werden, sodass eine optimale Verarbeitung des Mahlguts 9 bzw. Schüttgutes 9, welches zum Einspritzen in das Formwerkzeug 7 plastifiziert werden muss, ermöglicht wird. Zusätzlich weist die Anlage eine Überwachungsvorrichtung 15, insbesondere ein Kamerasystem, auf, um eine automatische Qualitätskontrolle des erzeugten Produktes 3 durchführen zu können.

Damit die einzelnen Geräte eingestellt bzw. programmiert werden können, weisen diese entsprechende Steuerelektronik und Steuerlogik auf, die über angeschlossene Displays 16 und/oder einer Rotsteuerung 17 bzw. Steuerung 17 bedient werden. Der Vollständigkeit halber wird weiters erwähnt, dass sämtliche Geräte mit entsprechenden Leitungen, insbesondere Spannungsversorgung, Netzwerkleitungen, Flüssigkeitsversorgungsleitungen, Materialleitungen usw. verbunden sind, die in der gezeigten Darstellung der besseren Übersicht halber nicht dargestellt wurden.

Eine Kunststoffverarbeitungsanlage 1 bzw. Produktionszelle 1 zur Herstellung von Spritzgießteilen 3 bzw. Kunststoffteilen 3 besteht also nicht nur aus der Produktionsmaschine 4, sondern zusätzlich aus den unterschiedlichsten Produktionsmitteln 2, im speziellen Peripheriegeräten, z.B. Temperiergeräte 13a, Kühlgeräte 13b, Heisskanalsysteme, Granulat-Trockner 12, Werkzeug-Trockner, Dosiergeräte 11, Roboter 5, Automatisierungssysteme, etc. Die Produktionsmittel 2 verwenden im Regelfall interne, also direkt in die Steuerung des Produktionsmittels 2 integrierte Sensoren, oder externe Sensoren, die wiederum über Direktverdrahtung oder eine Geräteschnittstelle an die Steuerungslogik des Produktionsmittels 2 angeschlossen sind. Diese Sensoren übertragen analoge oder diskrete Zustände, die in weiterer Folge Aktuatoren im Produktionsmittel 2 auslösen, um das für die Funktionalität des Produktionsmittels 2 notwendige Verhalten zu bewirken.

Wie eingangs bereits erwähnt, werden als Schüttgut 3 üblicher Weise Neuware 18 zur Erzeugung eines Spritzgießteils 3 bzw. Kunststoffteils 3 eingesetzt, um eine Nachverfolgung einfach zu gewährleisten. Der Trend in den letzten Jahren geht jedoch immer mehr zu einem größeren Anteil an Sekundärrohstoffen 19, sogenannten Rezyklaten 19, jedoch bevorzugt bei einigen wenigen Kunststoffarten, wie beispielsweise PET, während beim Großteil der anderen Sorten der Anteil verhaltener wächst.

Die kunststoffverarbeitende Industrie ist demnach angehalten bei allen Kunststoffsorten den Anteil an wiederverwendeten Kunststoffen zu erhöhen. Speziell bei technisch und funktional hochwertigen Kunststoffen ist der Zusatz von Rezyklat 19 zur Neuware 18 jedoch kritisch, da Rezyklat 19, nicht notwendigerweise die gleichen physischen Eigenschaften aufweisen muss, wie der entsprechende Primärrohstoff 18, also die Neuware 18. Das kann mit der Anzahl an bereits vorgenommenen Recyclingvorgängen, also wie oft der Kunststoff wiederverwertet wurde, zusammenhängen, ebenso mit der Konstanz der Formeigenschaft und der Sortenreinheit des Rezyklats 19. Ein zu hoher Anteil an Rezyklat 19 oder die Verwendung von minderwertigem Rezyklat 19 kann die Qualität des fertigen Produktes 3 beeinträchtigen und optische, als auch physische Mängel hervorrufen. Außerdem kann der tatsächlich im fertigen Kunststoffteil 3 verwendete Rezyklatanteil nicht einfach festgestellt werden. Abgesehen von optischen Mängeln lässt sich eine falsche Zusammensetzung der Materialen in Kunststoffteilen 3 erst im Nachhinein, beispielsweise bei vorzeitiger Bruch- oder Rissbildung feststellen. Diese Mängel können im schlimmsten Fall sicherheitsrelevante Auswirkungen auf das fertige Produkt 3 haben, jedenfalls aber einen Gewährleistungsfall bzw. Imageverlust für den Hersteller des Fertigproduktes 3 bedeuten. Viele Hersteller geben deshalb ihren Lieferanten für die Produktion von technisch anspruchsvollen Kunststoffteilen 3 einen 100%-igen Anteil an Neumaterial 18 vor, da dies einfach rückverfolgbar ist bzw. bei einem Audit gesichert überprüft werden kann. Jedoch ist abzusehen, dass die öffentliche Meinung und politische Vorgaben die verpflichtende Verwendung von einem bestimmten Mahlgutanteil vorschreiben wird.

Erfindungsgemäß ist vorgesehen, dass die Zumischung einer zumindest zweiten Materialkomponente bzw. eines zweiten Schüttgutes 9, im speziellen eines Mahlgutes oder Rezyklats 19, zur Neuware 18, zu kontrollieren, zu dokumentieren und aufzuzeigen ist. Insbesondere soll die Rückverfolgbarkeit und das Einhalten eines vorgegebenen Mischungsverhältnisses zwischen Neuware 18 und zweitem Schüttgut 9, insbesondere Rezyklat 9, möglich sein.

Abnehmer von hochwertigen Kunststoffteilen 3 führen regelmäßige Audits durch, um bei ihren Lieferanten die Produktionsgegebenheiten und die Einhaltung der Spezifikation für die Produktion ihrer Kunststoffteile 3 zu überprüfen. Dazu gehört unter anderem auch die Verwendung der, für die jeweiligen Kunststoffteile 3 vorgeschriebenen Materiallieferanten bzw. etwaige Mischungen für die Erzeugung von Kunststoffteilen 3 mit speziellen Charakteristika, beispielsweise Farbe, Flammschutz, UV-Beständigkeit, Mahlgutanteil, etc. Ebenso Prozessparameter der kunststoffverarbeitenden Maschine 4, insbesondere der Spritzgießmaschine 4, und Qualitätsparameter, die entweder manuell oder automatisch und kontinuierlich oder nach einer festgelegten Stückzahl oder Produktionszeit vorzunehmen sind.

Weiters ist zu erwähnen, dass Mahlgut 9 innerhalb des Produktionsbetriebes typischerweise als Produktionsabfall (Anguss oder Schlechtteile) anfällt (also ein sogenanntes Inline-Recycling 19) oder auch extern zugekauft wird (Post-Consumer Recycling 19), jedenfalls einen Kostenvorteil gegenüber Neuware 18 besitzen kann oder deren Einsatz durch behördliche Vorgaben im Sinne der Kreislaufwirtschaft vorgegeben werden. Für Produzenten von Kunststoffteilen 3 ist es in vielen Fällen interessant, einen hohen Mahlgutanteil oder zumindest ein Inline-Recycling 19 zu verwenden. Abnehmer von qualitativ hochwertigen oder kritischen Kunststoffteilen 3 wollen aus Gründen der Sicherheit aktuell bestenfalls kein Rezyklat 19 verwendet sehen, jedoch darf niemals der maximal genehmigte und freigegebene Rezyklatanteil, also das Mischungsverhältnis, überschritten werden.

Für die kontrollierte Zumischung von zumindest einer weiteren Komponente, beispielsweise Schüttgut 9 in Form eines Rezyklats 19 zu Neuware 18, dient zum einen eine Vorrichtung zur Dosierung 11 von einer einzelnen oder mehrerer Komponenten, die in der kunststoffverarbeitenden Industrie typischerweise unter dem Einzelbegriff Dosiergerät 11 bekannt ist. Diese Geräte können einerseits mit einer oder mehreren Wiegezellen ausgestattet sein, wobei solche Geräte dann unter den Begriff gravimetrische Dosiergeräte 11 fallen. Die Materialdosierung der einzelnen Komponenten erfolgt einerseits im Batch 20 oder kontinuierlichen Betrieb. Im Batchbetrieb 20 werden die vorgeschriebenen Komponenten, also die Schüttgüter 9, auf den jeweilig vorgegebenen Prozentanteil (Rezept) dosiert, wobei jeder Prozentanteil selbstverständlich für die Verwiegung der einzelnen Dosiervorgänge innerhalb eines Batches 20 auf absolute oder relative Gewichte umgesetzt wird. Nach der Verwiegung kann ein Batch 20 vermischt und dann der kunststoffverarbeitenden Maschine, insbesondere der Spritzgiessmaschine 4, zur Verfügung gestellt werden. Ein Batch 20 wird typischerweise für mehrere Produktionszyklen verwendet, d.h., dass mehr Schüttgut 9 bzw. Mahlgut oder Rezyklat 9 der Spritzgießmaschine 4 zugeführt wird, als diese für die Herstellung eines einzigen Spritzgiessteils 3 benötigt, sodass aus einem Batch 20 mehrere Spritzgießteile 3 erzeugt werden. In der Zwischenzeit kann bereits das nächste Batch 20 vorbereitet werden, das vor Verbrauch an die Spritzgiessmaschine 4 gefördert wird. Eine andere Ausprägung eines Dosiergerätes 11 vereinzelt das oder die Schüttgüter in definierte Materialeinheiten (bis zur Granulatgröße, sogenannte Einzelkorn-Dosiergeräte 11) und vermischt diese anschließend zu einem Batch 20. In einem Dosiergerät 11 im kontinuierlichen Betrieb werden die Gewichtsverluste in den einzelnen Materialbehältern der Schüttgüter 9 ermittelt und kontrolliert und daraus eine entsprechende vorgegebene Materialmischung erzeugt. Dabei wird die zuzumischende Materialkomponente dem kontinuierlichen Materialstrom zugeführt.

Die mechanischen Komponenten der Dosiergeräte 11 werden über eine Recheneinheit (nicht dargestellt) gesteuert, die direkt im Dosiergerät 11 eingebaut, abgesetzt oder extern vorhanden ist und/oder in einer Primärmaschine (Produktionsmaschine 4) integriert sein kann.

Diese Recheneinheit ermittelt das im Batch 20 oder kontinuierlichen Betrieb produzierte Mischungsverhältnis der Schüttgüter 9, insbesondere der Neuware 18 und der zugemischten zumindest einen weiteren Komponente, insbesondere dem Rezyklat 19, in Gewichtseinheiten, prozentual oder anderen Größen, die für jede Schüttgutkomponente individuell vorliegt und anschließend zusammengeführt werden kann. Je nach Ausprägung der Recheneinheit können diese und weitere Werte an die kunststoffverarbeitende Maschine 4 und/oder eine übergeordnete Recheneinheit (Steuerung, Arbeitszellensteuerung, PC) mit einer entsprechenden Software zur Auswertung, Protokollierung, Speicherung, Anzeige, Regelung, etc., beispielsweise ein MES oder ERP-System, übermittelt werden.

Die kunststoffverarbeitende Maschine 4 ermittelt ihrerseits den Materialdurchsatz für die Produktion der jeweiligen Kunststoffteile 3. Im Falle einer Spritzgießmaschine 4 ist dies beispielsweise das dosierte, d.h. durch eine Einspritzschnecke in einen Einspritzzylinder eingezogene und aufgeschmolzene Schüttgut 9, welches anschließend in ein formgebendes Werkzeug 7 zur Produktion der Fertigteile bzw. Spritzgiessteile 3 eingespritzt wird.

Fortschrittliche Prozesstechnologien der kunststoffverarbeitenden Maschine 4 ermöglichen durch Analyse des Verhaltens der Schüttgutschmelze in Relation zu den Prozessparametern und möglichen Umgebungsbedingungen, Schwankungen in der Viskosität der Schmelze, den Schmelzflussindex (MFI, MFR) 21 oder eine andere Kennzahl die proportional zur Viskosität ist, zu berechnen.

Dieser Schmelzflussindex oder die Kennzahl für die Viskosität 21 wird dabei jeweils zu einem Produktionszyklus eines Spritzgießteils 3 ermittelt, sodass für jedes Spritzgießteil 3 dieser Wert vorliegt.

Dabei ist zu erwähnen, dass bei der Ermittlung des Schmelzflussindex 21 oder der Kennzahl für die Viskosität 21 entsprechende Schwankungen aufgrund sich ändernder Parameter bzw. geringfügige Mischungsunterschiede innerhalb eines Batches 20 möglich sind, sodass für die Kontrolle, ob ein Spritzgießteil 3 gut oder Ausschuss ist, vorzugsweise ein Toleranzbereich definiert werden sollte. Diese Schwankungen können auf unterschiedliche Faktoren zurückzuführen sein, darunter auch ein variabler Anteil an Mahlgut 9 oder Rezyklat 19. Andere Faktoren sind ein unzureichend getrocknetes Primärmaterial, welches jedoch durch die laufende Übermittlung und Kontrolle des Taupunktes eines vorgeschalteten Materialtrockners und der korrekten Verweilzeit des Primärmaterials im Trocknungsbehälters festgestellt und bei korrekter Anwendung ausgeschlossen werden kann. Abgesehen davon ist eine Änderung der Schüttgutzusammensetzung der Hauptgrund für stark schwankende Viskosität 21 des Materials 9 (18,19).

Beispielsweise ist es möglich, dass in einem Einricht-/Referenzbetrieb die geforderte Zusammensetzung (Rezept) des Schüttgutes 9 nach dem Dosiervorgang eingestellt und bei nachfolgenden Spritzgießzyklen der errechnete Schmelzflussindex oder die Kennzahl für die Viskosität 21 automatisch ermittelt wird. Nach dem Einschwingen des Systems werden Referenzwerte abgespeichert. Im laufenden Betrieb werden diese Parameter auf weitgehende Übereinstimmung bzw. erlaubte Differenzen überprüft. Die Parameter Materialdurchsatz der Vorrichtung zum Dosieren, also dem Dosiergerät 11, und Materialdurchsatz der kunststoffverarbeitenden Maschine 4 wird zusätzlich mitprotokolliert, damit eine Beimengung von Schüttgut 9 nach dem Dosiervorgang detektiert werden kann.

In vielen Applikationen stellt die erlaubte Beimengung von Rezyklat 19 bzw. Sekundärware 19 eine Obergrenze dar. Wesentlich unkritischer ist ein Unterschreiten der Menge des Mahlgutes/Rezyklats 19, bis zur kompletten Nichtverwendung von Mahlgut/Rezyklat 19. In solchen Fällen können zwei unterschiedliche Referenzeinstellung 22, 23 abgespeichert werden, die die Unter- 23 und Obergrenze 22 des Schmelzflussindex 21 bzw. Kennzahl für die Viskosität 21 darstellen. Alle Werte dazwischen mit den entsprechenden Rückmeldungen von der Vorrichtung zum Dosieren 12 sind akzeptabel.

Durch die Ermittlung des Schmelzflussindex 21 oder Kennzahl für die Viskosität 21 direkt beim Einspritzprozess der Spritzgießmaschine 4 ist es erstmals möglich, einen Parameter zu generieren, der auf die Zumischung von Mahlgut/Rezyklat 19 zur Neuware für jedes erzeugte Spritzgiessteil 3 rückschließen lässt. Dabei ist es beispielsweise auch möglich, dass bei der Inbetriebnahme der Kunststoffverarbeitungsanlage 1 zuerst ein Spritzgießteil 3 nur mit Neuware 18 hergestellt wird und die daraus ermittelte bzw. berechnete Referenzeinstellung 23 als untere Referenzkurve 23 gespeichert wird. Anschließend wird ein weiterer Zyklus mit maximaler Zumischung von Rezyklat 19 gestartet und die sich daraus ergebende Kurve als Referenzeinstellung 22, also die Obergrenze, hinterlegt wird. nachdem die beiden oberen und unteren Referenzeinstellungen 22,23 festgelegt wurden, kann der vorgeschriebene Produktionszyklus mit entsprechend angepassten Parametern, insbesondere die Zumischung bzw. das Mischverhältnis zwischen Neuware 18 und Rezyklat 19 bzw. Mahlgut 9, durchgeführt werden.

Dabei ist es nunmehr erstmals möglich, dass bei der Herstellung eines Spritzgiessteils 3 der Schmelzflussindex 21 oder eine Kennzahl für die Viskosität 21 ermittelt wird und sofort festgestellt werden kann, ob dieses Spritzgiessteil 3 innerhalb der Toleranz liegt oder einen unerlaubt hohen Anteil an Mahlgut/Rezyklat 18,19 aufweist. Dabei ist es auch möglich, dass bei einer gewissen Voreinstellung von Häufungen für Ausschussware, also wenn der Schmelzflussindex oder eine Kennzahl für die Viskosität 21 des Spritzgiessteile 3 außerhalb der beiden Referenzeinstellungen 22,23 liegt, ein Warnsignal oder SMS, Mail oder dergleichen vorzugsweise von der kunststoffverarbeitenden Maschine 4 ausgesendet wird, sodass schnellstmöglich eine Änderung der Materialzusammensetzung vom Bediener bzw. Wartungspersonal vorgenommen werden kann. Der Vollständigkeit halber wird erwähnt, dass bei Feststellung einer Ausschussware aufgrund des ermittelten Schmelzflussindex oder der Kennzahl für die Viskosität 21 des gerade hergestellten Spritzgiessteils 3 dies an die Entnahmeeinheit, insbesondere dem Roboter 5, mitgeteilt wird, sodass dieser das Spritzgießteil 3 gesondert ablegt. Weiters wird erwähnt, dass vorzugsweise die Ermittlung der Referenzeinstellungen 22,23 bzw. -kurven 22,23 im Zuge eines Audit festgelegt werden können, sodass der Auftraggeber genau kontrollieren kann, welches Material, insbesondere Neuware 18 und Zumischware bzw. -material, insbesondere Rezyklat 19, verwendet wird.

Im Idealfall entspricht der Materialdurchsatz durch die kunststoffverarbeitende Maschine 4 dem ermittelten Materialdurchsatz durch die zumindest eine Vorrichtung zur Dosierung 11 und es werden Spritzgießteile 3 mit einem Schmelzflussindex oder Kennzahl für die Viskosität 21 innerhalb der Toleranzbereiche, also der Referenzeinstellungen 22,23, produziert.

Eventuelle Veränderungen im auditierten Herstellungsprozess bzw. Manipulationen können mit der erfindungsgemäßen Lösung einfach aufgedeckt werden, da jede Veränderung des Mischverhältnisses vor, in oder nach dem Dosiergerät 11 durch die Auswertung des Schmelzflussindex 21 oder des Kennzahl für die Viskosität 21 direkt erkannt wird, d.h., dass die Dosiercharakteristika der einzelnen Komponenten, insbesondere der Neuware 18 und des Rezyklats 19, beim Anfangs ermittelten Audit ebenfalls als Parameter protokolliert und gespeichert werden. Sollte sich während des Produktionsbetriebes die Dosiercharakteristika verändern, wird die Abweichung von den ursprünglichen Parametern erkannt und dokumentiert.

Wenn beispielsweise der Betreiber der kunststoffverarbeitenden Maschine 4 zusätzlich zum Material, welches mit Hilfe des zumindest einen Dosiergerätes 11 erstellt wurde, noch zumindest ein weiteres Material mit Hilfe eines Fördergerätes mit Dosierweiche (einem Ventil zur Beschickung der Maschine mit mehr als einem Material) nach dem Dosiergerät 11, aber noch vor dem Materialeinfüllstutzen der kunststoffverarbeitenden Maschine 4 fördert, wird erkannt, dass ein höherer Prozentsatz an anderen Komponenten, beispielsweise Mahlgut 9 eingebracht wird und der Schmelzflussindex oder die Kennzahl für die Viskosität 21 würde außerhalb der Toleranzbereiche 22,23 liegen. Prinzipiell wäre es auch möglich, das Primärmaterial, also die Neuware 18, bereits mit Mahlgut, insbesondere Rezyklat 19, zu vermengen, um dann zwar das vorgegebene Mischungsverhältnis von Primärkomponente und Sekundärkomponenten zu erfüllen, jedoch gleichzeitig einen höheren Anteil an Sekundärkomponenten/Mahlgut beizumengen, was ebenfalls über den Schmelzflussindex oder die Kennzahl für die Viskosität 21 erkannt wird.

Die für die Prozessüberwachung vorhandenen und ermittelten Parameter stehen prinzipiell dem oder den Dosiergeräten 11, der kunststoffverarbeitenden Maschine 4 oder letztendlich einer Recheneinheit für die Aufzeichnung, Protokollierung, Analyse, Anzeige, etc. zur Verfügung. Im Idealfall werden die einzelnen Daten aufgezeichnet und in Verbindung gebracht. Wenn es sich bei der kunststoffverarbeitenden Maschine 4 um eine Spritzgießmaschine 4 handelt, dann ist die Aufzeichnungsfrequenz typischerweise ein Produktionszyklus, also für jedes Spritzgießteil 3 oder gleichzeitig produzierte Spritgießteile 3. Nach der Produktion des Spritzgießteils 3 werden die einzelnen Daten der Spritzgießmaschine 4, beispielsweise Materialdurchsatz, Temperaturen, Drücke, Sensorwerte, Prozessparameter, Kennzahl zum Fließverhalten oder Schmelzflussindex (MFI, MFR) 21, etc. abgespeichert und gegebenenfalls an der Maschine angezeigt. Von dem einen oder mehreren Dosiergeräten 11 wird das Mischungsverhältnis in jeglicher physikalischen Form (Prozent, absolutes, relatives Gewicht, etc.), Prozessparameter für den Dosiervorgang, Materialdurchsatz, etc. abgespeichert, sodass eine lückenlose Nachverfolgung aller Parameter möglich ist.

Diese Daten können nun unmittelbar nach dem Produktionszyklus oder in einer nachfolgenden Analyse auf Korrektheit oder Übereinstimmung mit den auditierten Werten verglichen werden. Eine Abweichung kann jederzeit auf der externen Recheneinheit, der Steuerung der Spritzgießmaschine 4 oder der Steuerung des Dosiergerätes 11 angezeigt werden.

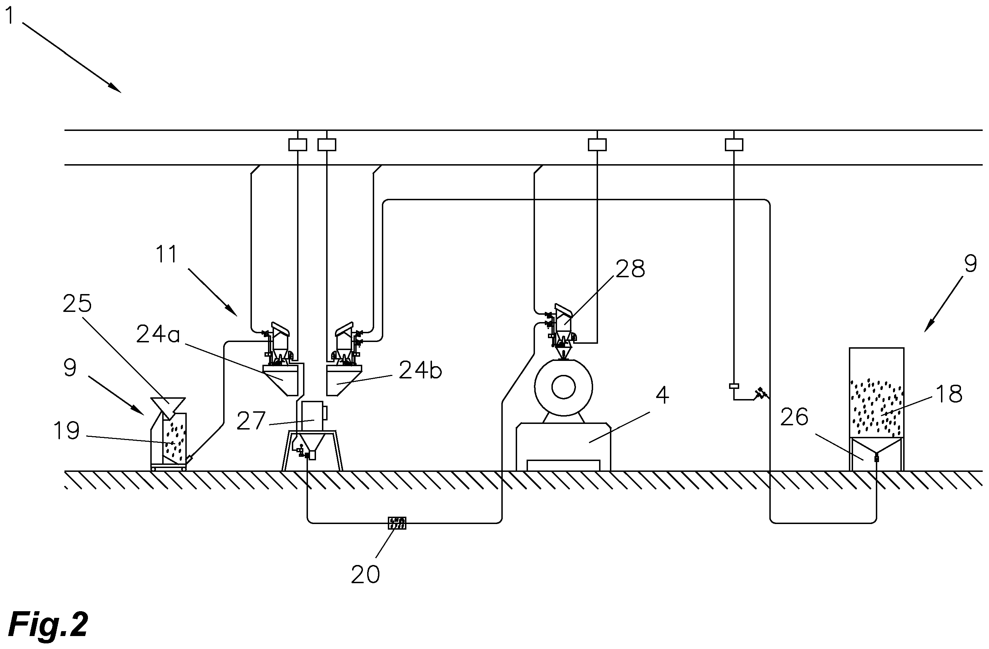

Im speziellen ist in Fig. 2 eine Arbeitszelle zur Verarbeitung von Schüttgut 9 als Neuware 18 und/oder Schüttgut 9, insbesondere als Rezyklat 19, welches aus zumindest zwei Komponenten zusammengemischt wird, wobei die Vorrichtung zur Dosierung 11 extern zur kunststoffverarbeitenden Maschine 4 platziert ist. Diese Vorrichtung zur Dosierung 11 ist ein sogenanntes gravimetrisches Dosiergerät 11, mit in dieser Darstellung zwei Materialbehältern 24a, 24b. Ein Materialbehälter 24a wird über eine Mühle 25 mit Rezyklat 19 und der weitere Materialbehälter 24b über ein Fördergerät 26 mit Neuware 18 versorgt. Alternativ kann die Versorgung auch von einer externen Quelle erfolgen. Die Neuware 18 und das Rezyklat 19 werden im gewünschten, d.h. vorgegebenem Verhältnis dosiert und typischerweise anschließend unter dem Dosierbehälter bzw. Materialbehälter 24a, 24b befindlichen Mischbehälter 27 gemischt. In dieser Darstellung wird das gemischte Material, insbesondere der Batch 20, von einem Fördergerät 28, welches über dem Materialeinfüllstutzen montiert ist, zur kunststoffverarbeitenden Maschine 4 gefördert.

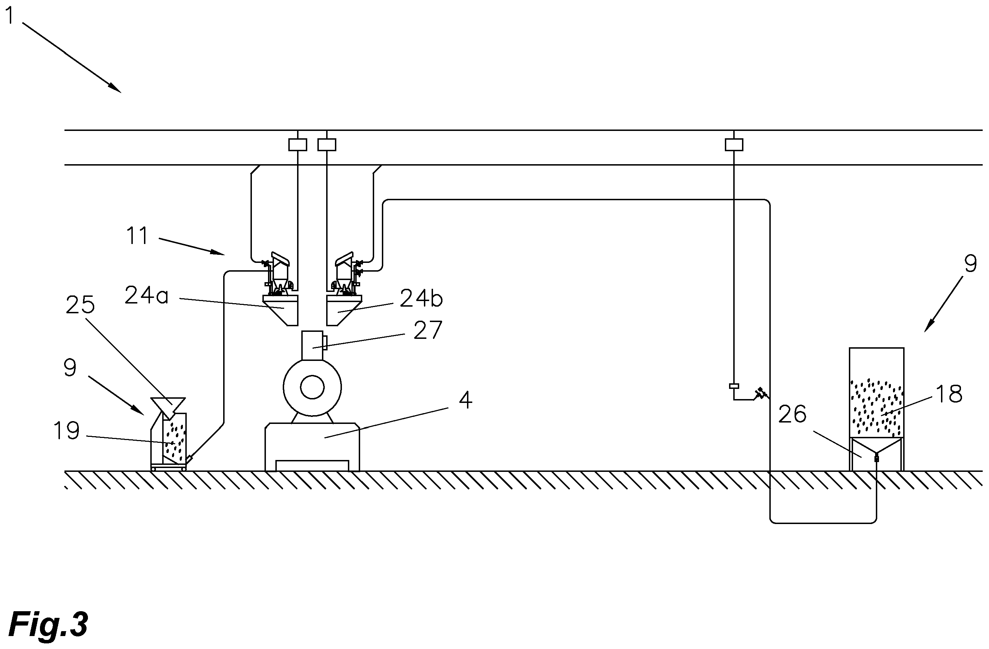

Fig 3. zeigt eine andere Variante eines Aufbaus einer Arbeitszelle zur Verarbeitung von Schüttgut 9 als Neuware 18 und/oder Schüttgut 9, insbesondere Rezyklat 19, welches aus zumindest zwei Komponenten zusammengemischt wird, wobei die Vorrichtung zur Dosierung 11 direkt auf der kunststoffverarbeitenden Maschine 4 platziert ist. Diese Vorrichtung zur Dosierung 11 ist wiederum ein sogenanntes gravimetrisches Dosiergerät 11, mit in dieser Darstellung zwei Materialbehältern 24a, 24b. Ein Materialbehälter 24b wird über ein Fördergerät 26 und der weitere Materialbehälter 24a von einer Mühle 25 mit Schüttgut 9, insbesondere Rezyklat 19, versorgt. Alternativ kann die Versorgung auch von einer externen Quelle erfolgen. Die Neuware 18 und das weitere Schüttgut 9, insbesondere Rezyklat 19, werden im gewünschten, d.h. vorgegebenem Verhältnis dosiert und typischerweise anschließend in einem Mischbehälter 27 gemischt. In dieser Darstellung wird das gemischte Material direkt dem Materialeinfüllstutzen der kunststoffverarbeitenden Maschine 4 zur Verfügung gestellt.

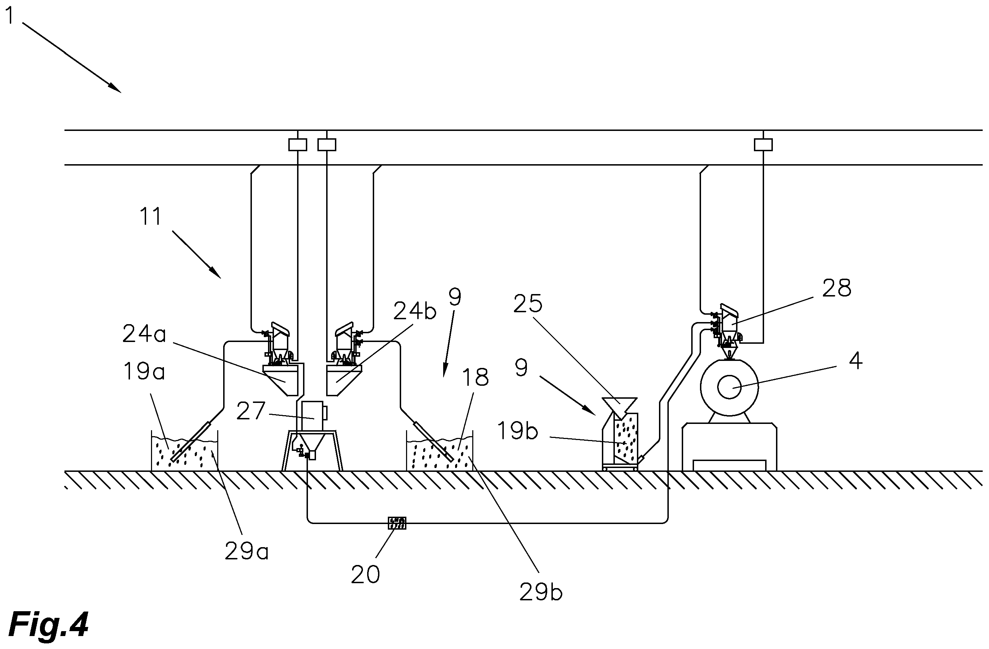

Fig 4. Zeigt eine Arbeitszelle zur Verarbeitung von Neuware 18 und/oder Schüttgut 9, insbesondere Rezyklat 19a, welches aus zumindest zwei Komponenten zusammengemischt wird, wobei die Vorrichtung zur Dosierung 11 extern zur kunststoffverarbeitenden Maschine 4 platziert ist. Diese Vorrichtung zur Dosierung 11 ist ein sogenanntes gravimetrisches Dosiergerät 11, mit in dieser Darstellung zwei Materialbehältern 24a, 24b. Die Materialbehälter 24a,24b wird über ein Fördergerät von einer externen Quelle 29a,29b mit Rezyklat 19a und Neuware 18 versorgt. Die Neuware 18 und das Rezyklat 19a werden im gewünschten, d.h. vorgegebenem Verhältnis dosiert und typischerweise anschließend unter dem Dosierbehälter befindlichen Mischbehälter 27 gemischt. In dieser Darstellung wird das gemischte Material von einem Fördergerät 28, welches über dem Materialeinfüllstutzen montiert ist, zur kunststoffverarbeitenden Maschine 4 gefördert. Dieses Fördergerät 28 ist mit einer Mischweiche ausgestattet, die eine weitere Materialkomponente 9, auch Rezyklat 19b fördern kann.

Würde die zusätzliche Mühle 25 unerlaubt hinzugefügt, so würde das resultierende Verhältnis von Neuware 18 zu Rezyklat 19a und 19b nicht mehr im erlaubten und auditierten Verhältnis stehen und kann über die Abweichung der Kennzahl zum Fließverhalten des zugeführten Schüttgutes erkannt werden.

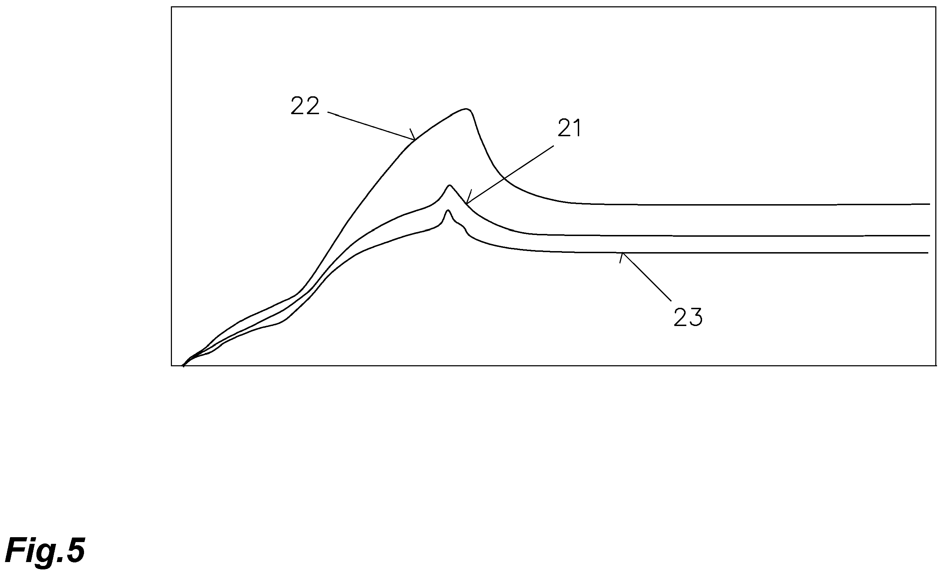

Weiters ist in Fig. 5 eine schematische Darstellung der Auswirkung von Schüttgut mit unterschiedlichem Schmelzflussindex 21 auf den Druckverlauf beim Einspritzvorgang der Spritzgießmaschine gezeigt, bei dem der Verlauf von einem hochviskosen zu einem niederviskosen Material dargestellt ist, wobei sich als direkte Folge der Umschaltzeitpunkt und die Nachdruckhöhe des Einspritzvorganges verändern und diese Faktoren in die Berechnung des Äquivalents zu einem Schmelzflussindex einfließen

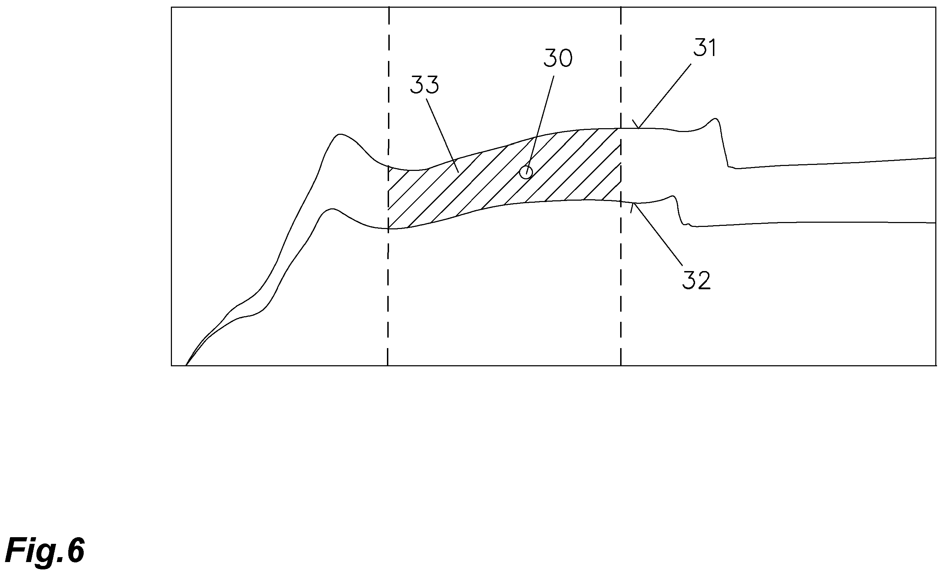

Fig. 6 zeigt das Einspritzprofil über Zeit für zwei Materialien unterschiedlicher Viskosität (32 für geringe Viskosität und 31 für hohe Viskosität). Die hervorgehobene Fläche 33 stellt die Differenz der geleisteten Einspritzarbeit für Materialien unterschiedlicher Viskosität dar.

Zur Ermittlung der Viskosität 30 werden die Sensordaten vom Antrieb und der Einspritzeinheit der kunststoffverarbeitende Maschine 4, insbesondere der Spritzgießmaschine 4, ermittelt, sodass aufgrund der Rückmeldung der Stromregler (nicht dargestellt) des oder der Antriebe und der Einspritzeinheit die Viskosität 30 berechnet. Anschließend wird die ermittelte Viskosität 30 für die gerade hergestellten Spritzgießteile 3 mit den definierten Einspritzprofilen 31,32 verglichen, welche innerhalb des Bereiches 33 liegt und somit die Mischung der Schüttguter 9 für richtig gewertet wird.

Grundsätzlich kann gesagt werden, dass die Produktion und der Konsum von Kunststoffen seit dem Anfang der Massenproduktion in den fünfziger Jahren weltweit rasant gestiegen sind. Ein tagesaktuelles und politisch aufgeladenes Thema ist die Handhabung von Kunststoffabfällen, speziell im Hinblick auf die Verschmutzung der Meere und somit deren Vermeidung oder Rückführung in den Produktionsprozess. In Österreich, stellvertretend für andere zentraleuropäische Länder werden 98% der Kunststoffe einer stofflichen oder thermischen Verwertung zugeführt, während 2% deponiert werden. Von speziellem Interesse ist die Abdeckung des Kunststoffverbrauches mit Sekundärrohstoffen, also wiederverwendeten Kunststoffen. In Österreich beträgt der Anteil an Sekundärrohstoffen im Untersuchungszeitraum 2010 13% , während 87% aus Primärrohstoffen hergestellt wird (Quellen: https://www.sciencedirect.com/science/article/pii/S0921344916302956?via%3Dihub und https://www.sciencedirect.com/science/article/pii/S0956053X17308802?via%3Dihub).

Eine durch die Consultic Marketing & Industrieberatung GmbH in Alzenau angefertigte Studie zur Produktion, Verarbeitung und Verwertung von Kunststoffen in Deutschland 2015 gibt an, dass 99 Prozent der Kunststoffabfälle verwertet werden, davon 45% werkstofflich als Sekundärrohstoff, 1% rohstofflich und 53% energetisch. Quelle: Consultic-Studie: Studie Produktion, Verarbeitung und Verwertung von Kunststoffen in Deutschland 2015 im Auftrag von BKV Beteiligungs- und Kunststoffverwertungsgesellschaft mbH, Frankfurt a.M., und PlasticsEurope, Brüssel, IK-Industrievereinigung Kunststoffverpackungen, VDMA Verband Deutscher Maschinen- und Anlagenbau e.V., Frankfurt a.M., bvse-Bundesverband Sekundärrohstoffe und Entsorgung e.V., Bonn wurde angefertigt von der Consultic Marketing & Industrieberatung GmbH in Alzenau, 2015

Um eine Nachverfolgung eines Mischungsverhältnisses zu ermöglichen, wurde ein Verfahren zur Verarbeitung von wiederverwendetem oder rezykliertem Schüttgut 9, insbesondere Feststoffen, wie Granulate, Pulver, Körner, Folien, Schnipsel, o. dgl., vorzugsweise für kunststoffverarbeitende Maschinen 4 geschaffen, bei dem eine Vorrichtung zur Dosierung 11 von zumindest zwei in separaten Zuführeinrichtungen oder Behältern 24a,24b vorhandenen Schüttgütern 9, wovon zumindest ein Schüttgut 9 aus wiederverwendeten Kunststoffen, also ein sogenanntes Rezyklat 19 oder Regranulat ist, die kunststoffverarbeitende Maschine 4 nach der Dosierung direkt oder über Zwischenstationen mit dem dosierten Schüttgut 9 versorgt, wobei die zumindest eine Vorrichtung zur Dosierung 11, diese zumindest zwei separaten Schüttgüter 9 in beliebiger Abfolge zusammenführt, wobei gleichzeitig oder nach der Dosierung das jeweils dosierte Schüttgutgewicht ermittelt wird und die Information zu den Schüttgutgewichten und/oder eine daraus resultierende Information, die den Materialdurchsatz jedes einzelnen oder aller zugeführter Schüttgüter 9 darstellt, von der Steuerung der Vorrichtung zur Dosierung 11 an die kunststoffverarbeitende Maschine 4 oder an eine übergeordnete Steuerung übertragen wird und in der kunststoffverarbeitenden Maschine 4 eine physikalische Darstellung des Fließverhaltens, beispielsweise ein Schmelzflussindex 21, des zugeführten Schüttgutes 9 und/oder der Materialdurchsatz oder -verbrauch der Maschine ermittelt wird und diese Informationen in der kunststoffverarbeitenden Maschine 4 oder in der übergeordneten Steuerung in Verbindung gebracht werden.

Der Vollständigkeitshalber wird darauf hingewiesen, dass alle Geräte bzw. Produktionsmittel 2 als sogenannte Stand-Alone-Geräte ausgebildet sein können und somit unabhängig von anderen autark arbeiten. Die Produktionsmittel 2 sind dabei direkt oder indirekt über Leitungen bzw. Netzwerke miteinander verbunden, um einen Datenaustausch untereinander durchführen zu können.

## Patentansprüche

1. Verfahren zur Verarbeitung von wiederverwendetem oder rezykliertem Schüttgut (9), insbesondere Feststoffen, wie Granulate, Pulver, Körner, Folien, Schnipsel, o. dgl., für kunststoffverarbeitende Spritzgießmaschinen (4), wobei eine Vorrichtung zur Dosierung (11) von zumindest zwei in separaten Zuführeinrichtungen oder Behältern (24) vorhandenen Schüttgütern (9), wovon zumindest ein Schüttgut (9) aus wiederverwendeten Kunststoffen, also ein sogenanntes Rezyklat, Mahlgut (19) oder Regranulat ist, die kunststoffverarbeitende Maschine (4) nach der Dosierung direkt oder über Zwischenstationen mit dem dosierten Schüttgut (9) versorgt, wobei die zumindest eine Vorrichtung zur Dosierung (11), diese zumindest zwei separaten Schüttgüter (9) in beliebiger Abfolge zusammenführt, wobei gleichzeitig oder nach der Dosierung das jeweils dosierte Schüttgutgewicht ermittelt wird und die Information zu den Schüttgutgewichten und/oder eine daraus resultierende Information, die den Materialdurchsatz jedes einzelnen oder aller zugeführter Schüttgüter (9) darstellt, von der Steuerung der Vorrichtung zur Dosierung an die kunststoffverarbeitende Maschine (4) oder an eine übergeordnete Steuerung übertragen wird und in der kunststoffverarbeitenden Maschine (4) eine physikalische Darstellung des Fließverhaltens in Form eines Schmelzflussindex (21) oder ein äquivalenter Wert zum Schmelzflussindex (21) des zugeführten Schüttgutes (9) und/oder der Materialdurchsatz oder -verbrauch der Maschine (4) ermittelt wird und diese Informationen in der kunststoffverarbeitenden Maschine (4) oder in der übergeordneten Steuerung in Verbindung gebracht werden, wobei der Schmelzflussindex (21) oder ein äquivalenter Wert zum Schmelzflussindex (21) jeweils zu einem Produktionszyklus von Spritzgießteilen (3) ermittelt wird.

2. Verfahren nach Anspruch 1 **dadurch gekennzeichnet, dass** die Vorrichtung zur Dosierung (11) mit einer oder mehrerer Wiegezellen zur Ermittlung von Materialgewicht ausgestattet ist oder einer Zählvorrichtung für die Ermittlung von Schüttguteinheiten, die rechnerisch das Äquivalent zu Materialgewicht ergeben.

3. Verfahren nach Anspruch 1 und 2 **dadurch gekennzeichnet, dass** die kunststoffverarbeitende Maschine (4) aus den Verfahrensparameters der zu verarbeitenden Polymerschmelze des zugeführten Schüttgutes (9) nach der Dosierung eine physikalische Größe ermittelt, welche sich proportional zum Fließverhalten der Schmelze, beispielsweise einem Schmelzflussindex (21), verhält.

4. Verfahren nach den vorangegangenen Ansprüchen **dadurch gekennzeichnet, dass** das Mischungs- oder Gewichtsverhältnis der zumindest zwei Schüttgüter nach dem Dosiervorgang einer frei wählbaren oder einstellbaren Vorgabe oder einem ausgewählten oder übertragenem Rezept entsprechen muss, wobei bei Batchdosierung das fertig dosierte Batch (20) aus zumindest einem oder mehreren Dosiervorgängen je Schüttgut (9) gebildet wird oder bei kontinuierlicher Dosierung zumindest ein Schüttgut (9) durchgehend von der kunststoffverarbeitenden Maschine (4) eingezogen wird und zumindest ein Schüttgut (9) kontinuierlich nach Einstellung hinzudosiert wird.

5. Verfahren nach den vorangegangenen Ansprüchen **dadurch gekennzeichnet, dass** die übergeordnete Steuerung eine externe Arbeitszellensteuerung zur logischen Verwaltung und Datenkommunikation von Produktionsmitteln (2), beispielsweise der kunststoffverarbeitenden Maschine (4) und der Vorrichtung zur Dosierung (11) sein kann, mit oder ohne Anschluss an ein nachfolgendes MES- oder ERP-System oder direkt ein MES- oder ERP-System.

6. Verfahren nach den vorangegangenen Ansprüchen **dadurch gekennzeichnet**, das die von der kunststoffverarbeitenden Maschine (4) und von der zumindest einen Vorrichtung zur Dosierung (11) ermittelten Informationen, wie beispielsweise einzelne Schüttgutgewichte, das Mischungsverhältnis der Materialien, Materialverbräuche oder entsprechende Differenzen, eine Kennzahl zum Fließverhalten des zugeführten Schüttgutes oder der Schmelzflussindex (21) angezeigt, ausgewertet oder dokumentiert werden, vorzugsweise in der Steuerung der kunststoffverarbeitenden Maschine (4) oder in einem mit der Steuerung der kunststoffverarbeitenden Maschine (4) und/oder der Vorrichtung zur Dosierung (11) verbundenen System, beispielsweise einer übergeordneten Steuerung.

7. Verfahren nach den vorangegangenen Ansprüchen **dadurch gekennzeichnet, dass** die von der kunststoffverarbeitenden Maschine (4) und von der zumindest einen Vorrichtung zur Dosierung (11) ermittelten Informationen, wie beispielsweise einzelne Schüttgutgewichte, das Mischungsverhältnis der Materialien, Materialverbräuche oder entsprechende Differenzen, eine Kennzahl zum Fließverhalten des zugeführten Schüttgutes (9) oder der Schmelzflussindex (21) innerhalb einstellbarer Differenzen zu Referenzvorlagen liegen müssen, um auf eine korrekte Schüttgutbeistellung im laufenden Betrieb oder in einem Testbetrieb, beispielsweise einem Audit, schließen zu können.

8. Verfahren nach den vorangegangenen Ansprüchen **dadurch gekennzeichnet, dass** zumindest eine, vorzugsweise zwei Referenzvorlagen bzw. Referenzeinstellungen (22,23) vorliegen, die einerseits die genehmigte Mahlgutzumischung abbilden, als auch keine Mahlgutzumischung, sprich die alleinige Anwendung von Neuware (18), da alle Zwischenstufen als erlaubtes Mischungsverhältnis angesehen werden.

9. Verfahren nach den vorangegangenen Ansprüchen **dadurch gekennzeichnet, dass** darüber hinausgehende Daten, die sowohl von der kunststoffverarbeitenden Maschine (4) als auch von der oder den Vorrichtungen zur Dosierung (11) stammen, vorzugsweise in der Steuerung der kunststoffverarbeitenden Maschine (4) oder in einem mit der Steuerung der kunststoffverarbeitenden Maschine (4) und/oder der Vorrichtung zur Dosierung (11) verbundenen System, beispielsweise einer übergeordneten Steuerung, ausgewertet und/oder dokumentiert werden, beispielsweise die aktuellen Prozessparameter der Maschine (4) und/oder Prozessparameter von der oder den Vorrichtungen zur Dosierung (11), dgl.

10. Verfahren nach den vorangegangenen Ansprüchen **dadurch gekennzeichnet, dass** die Vorrichtung oder Vorrichtungen zur Dosierung (11) auch direkt mit der kunststoffverarbeitenden Maschine (4) verbunden sein können und eine über den Materialverbrauch und/oder eine Kennzahl zum Fließverhalten des zugeführten Schüttgutes (9) oder Schmelzflussindex (21) hinausgehende Datenverarbeitung zwischen den beiden Produktionsmitteln (2) stattfinden kann.

11. Verfahren nach den vorangegangenen Ansprüchen **dadurch gekennzeichnet, dass** die kunststoffverarbeitende Maschine (4) die Charakteristik der Schüttgutschmelze, beispielsweise in Form einer Kennzahl oder einem Schmelzflussindex (21), beim Dosieren bzw. beim Einspritzvorgang in das formgebende Werkzeug dokumentiert, analysiert oder sofort eine einstellbare Aktion ausführt.

12. Verfahren nach den vorangegangenen Ansprüchen **dadurch gekennzeichnet, dass** die Vorrichtung zur Dosierung, insbesondere das Dosiergerät (11), die Charakteristik der Mischung der Schüttgutkomponenten dokumentiert, analysiert oder sofort eine einstellbare Aktion ausführt.

13. Kunststoffverarbeitungsanlage (1) zur Verarbeitung von wiederverwendetem oder rezykliertem Schüttgut (9), insbesondere Feststoffen, wie Granulate, Pulver, Körner, Folien, Schnipsel, o. dgl, umfassend zumindest eine kunststoffverarbeitende Spritzgießmaschine (4), eine Vorrichtung zur Dosierung (11), insbesondere ein Dosiergerät (11), von zumindest zwei in separaten Zuführeinrichtungen oder Behältern (24) vorhandenen Schüttgütern (9) bzw. Mahlgut (9), wovon zumindest ein Schüttgut (9) aus wiederverwendeten Kunststoffen, also ein sogenanntes Rezyklat (19) oder Regranulat gebildet ist, und weitere für den Betrieb der kunststoffverarbeitenden Maschine (4) erforderliche Produktionsmittel (2), wie beispielsweise Temperiergeräte (13), Durchflussregler (14), usw. direkt oder indirekt mit der kunststoffverarbeitenden Maschine (4), insbesondere der Spritzgießmaschine (4), verbunden sind, **dadurch gekennzeichnet, dass** die kunststoffverarbeitende Maschine (4) und/oder eine externe Arbeitszellensteuerung zur physikalischen Darstellung eines Fließverhaltens in Form eines Schmelzflussindex (21) oder ein Äquivalent zu einem Schmelzflussindex (21), des zugeführten Schüttgutes (9) und/oder der Materialdurchsatz oder -verbrauch der Maschine und zum Ausführen des Verfahrens gemäß den Ansprüchen 1 bis 12 ausgebildet ist.

## Claims

1. Method for processing reused or recycled bulk material (9), in particular solids such as granulates, powders, grains, films, scraps or the like, for plastics-processing injection-moulding machines (4), wherein a device for dosing (11) at least two bulk materials (9) present in separate feed devices or containers (24), of which bulk materials (9) at least one bulk material (9) is made of reused plastics, i.e. a so-called recyclate, ground material (19) or regranulate, supplies the plastics-processing machine (4), after dosing, directly or via intermediate stations with the dosed bulk material (9),
wherein the at least one device for dosing (11) combines these at least two separate bulk materials (9) in any desired sequence, wherein simultaneously with or after the dosing, the respective dosed bulk-material weight is determined, and the information on the bulk-material weights and/or information derived therefrom that represents the material throughput of each individual or of all supplied bulk materials (9) is transmitted from the controller of the device for dosing to the plastics-processing machine (4) or to a superordinate controller and in the plastics-processing machine (4) a physical representation of the flow behaviour in the form of a melt flow index (21) or a value equivalent to the melt flow index (21) of the supplied bulk material (9) and/or the material throughput or material consumption of the plastics-processing machine (4) is determined, and this information is linked in the plastics-processing machine (4) or in the superordinate controller, the melt flow index (21) or an equivalent value being determined for each production cycle of injection-moulded parts (3).

2. Method according to claim 1, **characterised in that** the device for dosing (11) is equipped with one or more load cells for determining the material weight or with a counting device for determining bulk-material units that arithmetically correspond to the material weight.

3. Method according to claims 1 and 2, **characterised in that** the plastics-processing machine (4) determines after dosing, from the process parameters of the polymer melt to be processed of the supplied bulk material (9), a physical quantity that is proportional to the melt's flow behaviour, for example a melt flow index (21).

4. Method according to any of the preceding claims, **characterised in that** the mixing ratio or weight ratio of the at least two bulk materials after the dosing process must correspond to a freely selectable or adjustable specification or to a selected or transmitted recipe, wherein, in batch dosing, the completed dosed batch (20) is formed from at least one or several dosing operations per bulk material (9), or, in continuous dosing, at least one bulk material (9) is continuously drawn in by the plastics-processing machine (4) and at least one bulk material (9) is continuously added after adjustment.

5. Method according to any of the preceding claims, **characterised in that** the superordinate controller can be an external work-cell controller for the logical management and data communication of production resources (2), for example the plastics-processing machine (4) and the device for dosing (11), with or without connection to a downstream MES or ERP system, or directly an MES or ERP system.

6. Method according to any of the preceding claims, **characterised in that** the information determined by the plastics-processing machine (4) and by the at least one device for dosing (11), such as individual bulk-material weights, the mixing ratio of the materials, material consumptions or corresponding differences, an indicator of the flow behaviour of the supplied bulk material, or the melt flow index (21), is displayed, evaluated or documented, preferably in the controller of the plastics-processing machine (4) or in a system connected to the controller of the plastics-processing machine (4) and/or the device for dosing (11), such as a superordinate controller.

7. Method according to any of the preceding claims, **characterised in that** the information determined by the plastics-processing machine (4) and by the at least one device for dosing (11), such as individual bulk-material weights, the mixing ratio of the materials, material consumptions or corresponding differences, an indicator of the flow behaviour of the supplied bulk material (9) or the melt flow index (21) must lie within adjustable deviations from reference templates in order to confirm correct bulk-material supply during ongoing operation or in a test operation, for example an audit.

8. Method according to any of the preceding claims, **characterised in that** at least one, preferably two reference templates or reference settings (22, 23) are provided that map, on the one hand, the approved addition of ground material and, on the other hand, no addition of ground material namely the exclusive use of virgin material (18) since all intermediate stages are regarded as a permitted mixing ratio.

9. Method according to any of the preceding claims, **characterised in that** additional data originating both from the plastics-processing machine (4) and from the one or more devices for dosing (11) are evaluated and/or documented, preferably in the controller of the plastics-processing machine (4) or in a system connected to the controller of the plastics-processing machine (4) and/or the device for dosing (11), such as a superordinate controller e.g. the current process parameters of the machine (4) and/or process parameters of the one or more devices for dosing (11).

10. Method according to any of the preceding claims, **characterised in that** the device or devices for dosing (11) can also be directly connected to the plastics-processing machine (4) and data processing extending beyond the material consumption and/or an indicator of the flow behaviour of the supplied bulk material (9) or melt flow index (21) can take place between the two production resources (2).

11. Method according to any of the preceding claims, **characterised in that** the plastics-processing machine (4) documents or analyses the characteristics of the bulk-material melt, e.g. in the form of an indicator or a melt flow index (21), during dosing and/or during the injection process into the shaping mould or immediately performs an adjustable action.

12. Method according to any of the preceding claims, **characterised in that** the device for dosing, in particular the dosing device (11), documents or analyses the characteristics of the mixture of the bulk-material components or immediately performs an adjustable action.

13. Plastics-processing installation (1) for processing reused or recycled bulk material (9), in particular solids such as granulates, powders, grains, films, scraps or the like, comprising at least one plastics-processing injection-moulding machine (4), a device for dosing (11), in particular a dosing device (11), of at least two bulk materials (9) or ground material (9) present in separate feed devices or containers (24), wherein at least one bulk material (9) is formed from reused plastics, i.e. a so-called recyclate (19) or regranulate, and further production resources (2) required for operating the plastics-processing machine (4) such as temperature-control units (13), flow regulators (14) and the like, which are connected directly or indirectly to the plastics-processing machine (4), in particular the injection-moulding machine (4), **characterised in that** the plastics-processing machine (4) and/or an external work-cell controller is configured to determine a physical representation of a flow behaviour in the form of a melt flow index (21) or an equivalent to a melt flow index (21) of the supplied bulk material (9) and/or the material throughput or consumption of the machine and to carry out the method according to claims 1 to 12.

## Revendications

1. Procédé de traitement de matières en vrac réutilisées ou recyclées (9), en particulier de matières solides, tels que granulés, poudres, grains, films, copeaux, ou similaires, pour machines de moulage par injection (4) transformant des matières plastiques, dans lequel un dispositif de dosage (11) d'au moins deux matières en vrac (9) présentes dans des dispositifs d'alimentation ou des conteneurs séparés (24), dont au moins une matière en vrac (9) est constituée de plastiques réutilisés, c'est-à-dire un recyclat, une matière broyée (19) ou un regranulé, alimente la machine de transformation de plastique (4) directement ou via des stations intermédiaires avec la matière en vrac dosée (9), dans lequel l'au moins un dispositif de dosage (11) combine ces au moins deux matières en vrac séparées (9) dans n'importe quelle séquence, dans lequel simultanément ou après le dosage, dans lequel le poids respectif de la matière en vrac dosée est déterminé et l'information sur les poids des matières en vrac et/ou une information résultante représentant le débit de matière de chacune ou de toutes les matières en vrac alimentées (9) est transmise par la commande du dispositif de dosage à la machine de transformation de plastique (4) ou à une commande supérieure, et dans la machine de transformation de plastique (4), une représentation physique du comportement d'écoulement sous forme d'un indice de fluidité (21) ou une valeur équivalente à l'indice de fluidité (21) de la matière en vrac alimentée (9) et/ou le débit ou la consommation de matière de la machine (4) est déterminé et ces informations sont mises en relation dans la machine de transformation de plastique (4) ou dans la commande supérieure, l'indice de fluidité (21) ou une valeur équivalente à l'indice de fluidité (21) étant déterminé pour chaque cycle de production de pièces moulées par injection (3).

2. Procédé selon la revendication 1, **caractérisé en ce que** le dispositif de dosage (11) est équipé d'une ou plusieurs cellules de pesée pour déterminer le poids du matériau ou d'un dispositif de comptage pour déterminer des unités de matière en vrac qui donnent mathématiquement l'équivalent du poids du matériau.

3. Procédé selon les revendications 1 et 2, **caractérisé en ce que** la machine de transformation de plastique (4) détermine, à partir des paramètres du procédé de la masse fondue polymère de la matière en vrac alimentée (9) après le dosage, une grandeur physique qui est proportionnelle au comportement d'écoulement de la masse fondue, par exemple un indice de fluidité (21).

4. Procédé selon les revendications précédentes, **caractérisé en ce que** le rapport de mélange ou de poids d'au moins deux matières en vrac après le processus de dosage doit correspondre à une spécification librement sélectionnable ou réglable ou à une recette sélectionnée ou transmise, dans lequel, lors d'un dosage par lots, le lot fini dosé (20) est formé à partir d'au moins une ou plusieurs opérations de dosage par matière en vrac (9) ou, lors d'un dosage continu, au moins une matière en vrac (9) est aspirée en continu par la machine de transformation de plastique (4) et au moins une matière en vrac (9) est dosée en continu après réglage.

5. Procédé selon les revendications précédentes, **caractérisé en ce que** la commande supérieure peut être une commande externe de cellule de travail pour la gestion logique et la communication de données des moyens de production (2), par exemple la machine de transformation de plastique (4) et le dispositif de dosage (11), avec ou sans connexion à un système MES ou ERP subséquent, ou directement un système MES ou ERP.

6. Procédé selon les revendications précédentes, **caractérisé en ce que** les informations déterminées par la machine de transformation de plastique (4) et par l'au moins un dispositif de dosage (11), telles que les poids individuels des matières en vrac, le rapport de mélange des matériaux, les consommations de matériaux ou les différences correspondantes, un indice relatif au comportement d'écoulement de la matière en vrac alimentée ou l'indice de fluidité (21) sont affichées, évaluées ou documentées, de préférence dans la commande de la machine de transformation de plastique (4) ou dans un système connecté à la commande de la machine de transformation de plastique (4) et/ou au dispositif de dosage (11), par exemple une commande supérieure.

7. Procédé selon les revendications précédentes, **caractérisé en ce que** les informations déterminées par la machine de transformation de plastique (4) et par le dispositif de dosage (11), telles que les poids individuels des matières en vrac, le rapport de mélange des matériaux, les consommations de matériaux ou les différences correspondantes, un indice relatif au comportement d'écoulement de la matière en vrac alimentée (9) ou l'indice de fluidité (21) doivent se situer dans des différences réglables par rapport à des modèles de référence afin de pouvoir conclure à une fourniture correcte de matière en vrac pendant le fonctionnement en cours ou dans un fonctionnement d'essai, par exemple un audit.

8. Procédé selon les revendications précédentes, **caractérisé en ce qu'**au moins un, de préférence deux modèles de référence ou réglages de référence (22, 23) sont présents, qui représentent d'une part le mélange de matière broyée approuvé, et d'autre part aucun mélange de matière broyée, c'est-à-dire l'utilisation exclusive de matière neuve (18), puisque tous les stades intermédiaires sont considérés comme un rapport de mélange autorisé.

9. Procédé selon les revendications précédentes, **caractérisé en ce que** des données supplémentaires, provenant à la fois de la machine de transformation de plastique (4) et du ou des dispositifs de dosage (11), sont de préférence évaluées et/ou documentées dans la commande de la machine de transformation de plastique (4) ou dans un système connecté à la commande de la machine de transformation de plastique (4) et/ou au dispositif de dosage (11), par exemple une commande supérieure, par exemple les paramètres de processus actuels de la machine (4) et/ou les paramètres de processus du ou des dispositifs de dosage (11), etc.

10. Procédé selon les revendications précédentes, **caractérisé en ce que** le dispositif ou les dispositifs de dosage (11) peuvent également être directement connectés à la machine de transformation de plastique (4) et un traitement de données allant au-delà de la consommation de matériau et/ou d'un indice relatif au comportement d'écoulement de la matière en vrac alimentée (9) ou de l'indice de fluidité (21) peut avoir lieu entre les deux moyens de production (2).

11. Procédé selon les revendications précédentes, **caractérisé en ce que** la machine de transformation de plastique (4) documente, analyse la caractéristique de la masse fondue de la matière en vrac, par exemple sous forme d'un indice ou d'un indice de fluidité (21), lors du dosage ou lors du processus d'injection dans l'outil de formage, ou exécute immédiatement une action réglable.

12. Procédé selon les revendications précédentes, **caractérisé en ce que** le dispositif de dosage, en particulier l'appareil de dosage (11), documente, analyse la caractéristique du mélange des composants de la matière en vrac ou exécute immédiatement une action réglable.

13. Installation de transformation de plastique (1) pour le traitement de matières en vrac recyclées ou réutilisées (9), en particulier de solides, tels que granulés, poudres, grains, films, copeaux, ou similaires, comprenant au moins une machine de moulage par injection (4), un dispositif de dosage (11), en particulier un appareil de dosage (11), d'au moins deux matières en vrac (9) ou matières broyées (9) présentes dans des dispositifs d'alimentation ou des conteneurs séparés (24), dont au moins une matière en vrac (9) est constituée de plastiques réutilisés, c'est-à-dire un recyclat (19) ou un regranulé, et d'autres moyens de production (2) nécessaires au fonctionnement de la machine de transformation de plastique (4), tels que des dispositifs de régulation de température (13), des régulateurs de débit (14), etc., sont connectés directement ou indirectement à la machine de transformation de plastique (4), en particulier la machine de moulage par injection (4), **caractérisée en ce que** la machine de transformation de plastique (4) et/ou une commande externe de cellule de travail est conçue pour la représentation physique d'un comportement d'écoulement sous forme d'un indice de fluidité (21) ou un équivalent à un indice de fluidité (21), de la matière en vrac alimentée (9) et/ou le débit ou la consommation de matière de la machine et pour exécuter le procédé selon les revendications 1 à 12.
